# EUROPEAN PATENT SPECIFICATION

(11) **EP 1 104 082 B1**
(45) Date of publication and mention of the grant of the patent: **27.12.2006**
(21) Application number: 00124787.3
(22) Date of filing: 14.11.2000
(51) Int. Cl.: H02K 15/16

(54) **Method and equipment for the balancing of electrical motors**
Verfahren und Vorrichtung zum Auswuchten von Elektromotoren
Procédé et appareil d'équilibrage de moteurs électriques

(30) Priority: 17.11.1999 IT TO991001
(43) Date of publication of application: 30.05.2001
(73) Proprietor: BTM S.r.l., 10095 Grugliasco (Torino) (IT)
(72) Inventor: Burzio, Egidio, 10026 Santena (Torino) (IT)
(74) Representative: Lotti, Giorgio

(56) References cited:
- EP-A- 0 905 866
- DATABASE WPI Derwent Publications Ltd., London, GB; AN 1986-191681 XP002162352 -& JP 61 098141 A (GEN MOTORS CORP), 16 May 1986 (1986-05-16)

## Description

The present invention refers to a method and an equipment for the balancing of electrical motors.

It is known that the mapping of electrical motors is initially performed at the end of the production cycle of each electrical motor in order to get a map which is used to correct possible unbalances presented by the electrical motor itself and that a balancing stage follows in order to correct the unbalances detected.

The balancing stage is generally performed by means of the removal or addition of material, either manually or automatically, according to the resources available: the automatic balancing is performed by means of a balancing machine provided with devices for the removal of the material, the devices being located and activated according to the data obtained during the mapping. In the second case, however, the balancing is performed by an operator who acts on the electrical motor and, according to the indications provided by the correction map, removes or adds material or applies balancing clips at the placed indicated in the map itself.

Both the aforementioned cases imply drawbacks caused basically by the removal of material and by the manual execution of the balancing.

In fact, the removal of material from the electrical motor not only produces metal shaving and dust which can reach the rotating parts or be attracted by the magnetised parts, but can also affect the aesthetic aspect of the electrical motor. On the other end, when the balancing is done manually, it is possible that the production time becomes longer, independently from the skills of the operator.

EP-0.905.866 discloses methods and apparatus for balancing electric motors using balancing masses which are inserted into the slots of the rotor or armature having coils of wire wound therein. The number of the slots and their distances around the rotor are fixed and only the rotor or the armature is balanced and not the complete electric motor.

It is an object of the present invention to provide a method for the balancing of electrical motors, said method allowing to realise the balancing of the electrical motors in a fast and efficient way and being free from the drawbacks describe above.

According to the present invention it is provided a method for the balancing of electrical motors, according to claim 1. and a balancing machine with an electrical motor, according to claim 5.

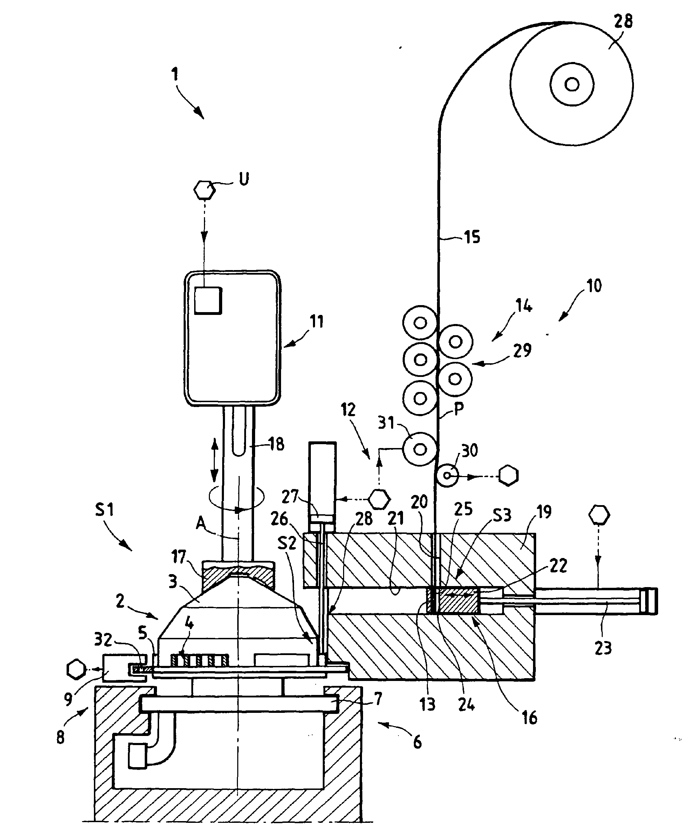

In the following, the invention will be described with reference to the appended figure showing a preferred embodiment provided as non-restrictive example and in which some parts are sectioned and some parts have been removed for clarity sake.

With reference to the appended figure, reference number 1 indicates the overall balancing machine for an electrical motor 2, including a cap 3, which rotates around an axis of rotation A, and is provided with a plurality of seats 4 evenly distributed around the axis A on an external periphery 5 of the cap 3 itself.

More in particular, each seat 4 is axially opened at one side and towards the front area of the cap 3, extends parallely to the axis A, and is made of plastic material as well as the whole cap 3.

The machine 1 includes a balancing station S1, a device 6 to lock the motor 2 in the station S1 itself by means of an action on a non-rotatable part 7 of the motor 2 itself and a mapping device 8, which is associated to the device 6 to detect a possible unbalance of the motor 2 located in the station S1, and includes, in turn, a photoelectric cell 9 and the force detectors (already known and not shown) present on the device 6 itself.

The machine 1 includes an automatic balancing unit 10 adapted to balance the motor 2 on the basis of the data provided by the mapping device 8.

The unit 10 includes a rotation device 11 adapted to rotate the cap 3 around the axis A by a determined rotation angle in order to locate a seat 4 at an insertion station S2 inside the station S1, and a feeding device 12 adapted to feed the station S2 with one or more pieces 13 of amagnetic material.

The unit 10 includes an advancement device 14 adapted to advance a continuous wire 15 made of amagnetic material along an advancement path P extending through a shearing station S3, and a shearing device 16 adapted to shear the wire 15 at the station S3 itself in order to obtain the pieces 13.

The rotation device 11 includes a locking head 17 and a shaft 18 which supports the head 17 and can both slide along the axis A from and to the station S1, and rotate around the axis A itself in order to engage the head 17 with a cap 3 and rotate the cap 3 itself.

The shearing device 16 includes a frame 19 which is provided with a gauded hole 20 placed along the path P and with a basically cylindrical channel 20 which is transversal to the hole 20 and extends between the stations S3 and S1. The device 16 includes a piston 22, which moves alternatively along the channel 21 due to the action of a linear actuator 23 and is provided with a seat 24 parallel to the hole 20 and adapted to house a free end 25 of the wire 13 to shear the end 25 itself together with one cylindrical wall of the hole 20 thus obtaining the pieces 13.

The feeding device 12, includes the shearing device 16 and also a rod 26 which is supported by the frame 19 in a position lined to the station S2 and, due to the action of a linear actuator 27, moves from and to the station S2 itself as well as frontally to an exit 28 of the channel 21 in order to engage a piece 13 inserted into the seat 24 thus transferring the piece 13 itself to a seat 4 while waiting for the station S2.

The advancement device 14 includes a coil store for the wire 15 located at the beginning of the path P; a stretching device 29 located along the path P between the station S3 and the store 28 itself; an encoder 30 located against the path P between the device 29 regulating the advancement of the wire 15 along the path P; and a motor drum 31 which is in contact with the wire 15 between the encoder 30 and the device 29 to advance the wire 15 itself along the path P.

Finally, the machine 1 includes a control unit U (indicated by en hexagon in the appended figure) controlling all the operation stages of the machine 1 itself and presenting the entrance connected with the encoder 30 and the photoelectric cell 9 while the exit is connected with the actuators 23 and 27, the device 11, and the drum 31.

A description of the operation of the machine 1 follows, starting from the moment in which a motor 2 is locked by the device 6 at the station S1, and the actuators 23 and 27 are located in respective retracted positions in which the seat 24 is lined with the hole 20 and the rod 26 is not at all engaged with the exit 28 of the channel 21.

Once the motor 2 has been locked at station S1, the motor 2 is mapped in the known way by means of the already mentioned force detectors and photoelectric cell 9, and the motor 2 is put into rotation around the axis A. The mapping, done starting from a reference hole 32 made through the periphery 5, allows the creation of a so-called correction map, the data of which will be used by the unit U itself to correct the unbalance of the motor 2 thanks to the insertion of one or more pieces 13 in one of the seats 4 and to the repetition of said insertion until the motor 2 is substantially balanced.

Once the correction map is known, the unit U extends the shaft 18 towards the cap 3 thus engaging the cap 3 itself with the head 17, detects the position of the hole 32 by means of the photoelectric cell 9, and rotates the cap 3 by a predetermined angle starting from the hole 32 itself in order to position a seat 4 in the station S2.

At the same time, the wire 15 is advanced along the path P and through the hole 20, so that a part of its end 25, the length L of which is controlled by the encoder 30, is placed inside the seat 24. While the wire 15 is advancing, the stretching device 29 eliminates, from the wire 15 itself, the residual bending caused by the permanence of the wire 15 in the coil 28, so that the length L of the pieces 13 can be better controlled.

The movement of the piston 22 towards the exit 28 of the channel 21 determines the separation of the end 25 from the wire 15 and the consequent creation of a piece 13 which the piston 22 causes to advance along the channel 21 itself.

When the seat 24 is positioned at the exit 28 the unit U activates the actuator 27 which moves the rod 26 through the seat 24 until the piece 13 is inserted with interference inside the seat 4 while waiting for the station S2.

The seat 4 and the length L of the piece 13 are selected by the unit U on the basis of the data provided by the balancing map, and the number of seats 4 taking part in the balancing, as well as the length L of the respective pieces 13, are calculated in order to achieve the balancing of the motor 2.

From the above description it can be easily understood that the machine 1 allows easy and fast balancing of the electrical motors 2 and that no man is needed for this operation, nor any material has to be removed from the motor 2.

It is to be understood that the invention is not limited to the embodiment here described and shown, which is provided as non-restrictive example of the balancing machine for electrical motors, and that shape, location of parts, construction and assembly details can be modified without going beyond the scope of the invention.

## Claims

1. A method for the balancing of electrical motors (2), the method including a mapping stage intended to detect the presence of possible unbalance of an electrical motor (2) located in a determined operative station (S1) and a following stage of automatic balancing of the electrical motor (2); the balancing stage including a feeding stage in which said operative station is fed with a determined number of balancing elements (13) and an inserting stage in which each balancing element (13) is inserted into a respective seat (4) on said motor; the number of balancing elements (13) being a function of the detected unbalance; **characterized in that** in the inserting stage each balancing element (13) is inserted in a seat (4) of said plurality of seats (4) evenly distributed on the external periphery (5) of a plastic cap (3) of the electrical motor (2), which rotates around an axis of rotation (A) of the motor (2) itself.

2. Method as claimed in claim 1, **characterised in that** said feeding stage includes an advancement stage in which a continuous wire (15) made of amagnetic material is advanced along an advancement path (P) extending through a shearing station (S3) and a shearing stage in which the wire (15) is sheared at said shearing station in order to get said balancing elements; the length (L) of each balancing element (13) being a function of the unbalance detected.

3. Method as claimed in claim 2, **characterised in that** said feeding stage includes a stage in which said wire (15) is unwind from a respective coil (28) and a stage in which the wire (15) is stretched at a stretching station (29) located along said advancement path (P) upstream said shearing station (S3).

4. Method as claimed in claim 2, **characterised in that** the balancing stage includes a stage of rotation in each seat (4) around said axis of rotation (A) by an angle of rotation which is a function of the unbalance detected.

5. A balancing machine (1) with an electrical motor (2), said machine (1) including mapping means (8) intended to detect a possible unbalance of said electrical motor (2) located in a determined operative station (S1) and means (10) for the automatic balancing of the electrical motor (2); the balancing means (10) including means (12) to feed said operative station with a determined number of balancing elements (13) as well as means (26) to insert each balancing element (13) inside a respective seat (4) present at said motor (2); the number of balancing elements (13) fed being a function of the detected unbalance; **characterised in that** the seats (4) are evenly distributed on the external periphery (5) of a plastic cap (3) of the electrical motor (2) and **in that** said plastic cap (3), rotates around an axis of rotation (A) of the motor (2) itself during the balancing operation.

6. A machine as claimed in claim 5, **characterised in that** said feeding means (12) include a device (14) adapted to advance a continuous wire (15) made of amagnetic material along an advancement path (P) extending through a shearing station (S3) and a shearing device (16) adapted to shear the wire (15) at the shearing station (S3) itself in order to get said balancing elements (13); the length (L) of each balancing element (13) being a function of the unbalance detected.

7. A machine as claimed in claim 6, **characterised in that** the feeding means (12) include a coil store (28) for said wire (15) and stretching means (29) adapted to stretch the wire (15) itself, located along the advancement path (P) between the shearing station (S3) and the store (28) itself.

8. A machine as claimed in claim 7, **characterised in that** the advancement device (12) includes a control element (30) checking the length of the wire (15) that has been advanced to the shearing station (S3).

9. A machine as claimed in claim 8, **characterised in that** said balancing means (10) include rotation means (11) adapted to rotate each seat (4) around the axis of rotation (A) by a determinate rotation angle which is a function of the unbalance detected.

10. A machine as claimed in claim 6, **characterised in that** said shearing device (16) includes a gauded hole (20) to let said wire (15) pass; an advancement channel (21) for said balancing elements (13), the channel being in communication at the entrance with the hole (20); and a mobile cutting element (22) alternatively along the channel (21) and in front of the hole (20).

## Patentansprüche

1. Verfahren zum Auswuchten von elektrischen Motoren (2), wobei das Verfahren eine Zuordnungsstufe umfasst, welche dazu vorgesehen ist, das Vorhandensein einer möglichen Unwucht eines elektrischen Motors (2) in einer vorbestimmten Arbeitsstation (S 1) zu erkennen, und eine Folgestufe der automatischen Auswuchtung des elektrischen Motors (2) umfasst; wobei die Auswuchtstufe eine Zuführungsstufe umfasst, in welcher die Arbeitsstation mit einer vorbestimmten Anzahl von Wuchtelementen (13) beliefert wird und eine Einfügestufe umfasst, in welcher jedes Auswuchtelement (13) in einen jeweiligen Sitz (4) auf dem Motor eingesetzt wird; wobei die Anzahl der Auswuchtelemente (13) eine Funktion der erkannten Unwucht ist; **dadurch gekennzeichnet, dass** in der Einfügestufe jedes Auswuchtelement (13) in einen Sitz (4) der Vielzahl von Sitzen (4) auf dem Außenumfang (5) eines Kunststoffaufsatzes (3) des elektrischen Motors (2) gleichmäßig verteilt eingesetzt wird, wobei der Kunststoffaufsatz um eine Rotationsachse (A) des Motors (2) selbst rotiert.

2. Verfahren nach Anspruch 1, **dadurch gekennzeichnet, dass** die Zuführungsstufe eine Förderstufe umfasst, in welcher ein durchgehender Draht (15) aus einem nicht magnetischen Material entlang eines Förderpfades (P) geführt wird, welcher sich durch eine Scherstation (S3) und einer Scherstufe erstreckt, in welcher der Draht (15) an der Scherstation abgeschert wird, um die Auswuchtelemente zu schaffen; wobei die Länge (L) jedes Auswuchtelementes (13) eine Funktion der erkannten Unwucht ist.

3. Verfahren nach Anspruch 2, **dadurch gekennzeichnet, dass** die Zuführungsstufe eine Stufe umfasst, in welcher der Draht (15) von einer entsprechenden Spule (28) abgewickelt wird und ferner eine Stufe umfasst, in welcher der Draht (15) an einer Reckstation (29) gereckt wird, welche entlang des Förderpfades (P) oberhalb der Scherstation (S3) angeordnet ist.

4. Verfahren nach Anspruch 2, **dadurch gekennzeichnet, dass** die Auswuchtstufe eine Stufe zur Rotation jedes Sitzes (4) um die Rotationsachse (A) durch einen Winkel der Rotation umfasst, welcher eine Funktion der erkannten Unwucht ist.

5. Wuchtmaschine (1) mit einem elektrischen Motor (2), wobei die Maschine (1) ein Zuordnungsmittel (8) umfasst, welches zur Erkennung einer möglichen Unwucht des elektrischen Motors (2) vorgesehen ist, welches in einer vorbestimmten Arbeitsstation (S1) angeordnet ist, weiterhin umfassend ein Mittel (10) für die automatische Auswuchtung des elektrischen Motors (2); wobei das Auswuchtmittel (10) ein Mittel (12) umfasst, um die Arbeitsstation mit einer vorbestimmten Anzahl von Auswuchtelementen (13) zu beliefern, weiterhin umfassend Mittel (26) zum Einsetzen jedes Auswuchtelementes (13) in einen jeweiligen Sitz (4), welcher am Motor (2) vorhanden ist; wobei die Anzahl der Auswuchtelemente (13), welche an den Motor geliefert werden, eine Funktion der erkannten Unwucht ist; **dadurch gekennzeichnet, dass** die Sitze (4) auf dem Außenumfang (5) eines Kunststoffaufsatzes (3) des elektrischen Motors (2) gleichmäßig verteilt angeordnet sind, wobei der Kunststoffaufsatz (3) um eine Rotationsachse (A) des Motors (2) selbst rotiert.

6. Maschine nach Anspruch 5, **dadurch gekennzeichnet, dass** das Fördermittel (12) eine Vorrichtung (14) umfasst, welche zum Vortrieb eines durchgehenden Drahtes (15) aus einem nicht magnetischen Material entlang eines Förderpfades (P) ausgeführt ist, der sich durch eine Scherstation (S3) und einer Schervorrichtung (16) erstreckt, welche dazu vorgesehen ist, den Draht (15) an der Scherstation (S3) selbst abzuscheren, um die Auswuchtelemente (13) zu schaffen; wobei die Länge (L) jedes Auswuchtelementes (13) eine Funktion der erkannten Unwucht ist.

7. Maschine nach Anspruch 6, **dadurch gekennzeichnet, dass** das Fördermittel (12) einen Spulenspeicher (28) für den Draht (15) und ferner ein Reckmittel (29) umfasst, welches geeignet ist, den Draht (15) selbst zu recken, welches entlang eines Förderpfades (P) zwischen der Scherstation (S3) und dem Speicher (28) selbst angeordnet ist.

8. Maschine nach Anspruch 7, **dadurch gekennzeichnet, dass** die Fördervorrichtung (12) ein Steuerelement (30) umfasst, welches die Länge des Drahtes (15) kontrolliert, welche in die Scherstation (S3) eingeführt ist.

9. Maschine nach Anspruch 8, **dadurch gekennzeichnet, dass** das Auswuchtmittel (10) ein Rotationsmittel (11) umfasst, welches geeignet ist, jeden Sitz (4) um die Rotationsachse (A) durch einen vorbestimmten Rotationswinkel zu rotieren, welcher eine Funktion der erkannten Unwucht ist.

10. Maschine nach Anspruch 6, **dadurch gekennzeichnet, dass** die Schervorrichtung (16) ein Führungsloch (20) umfasst, um den Draht (15) einzuführen; und ferner einen Förderkanal (21) für die Auswuchtelemente (13) umfasst, wobei der Kanal mit dem Eintritt des Loches (20) in Verbindung steht; und ein mobiles Schnittelement (22) umfasst, welches abwechselnd entlang des Kanals (21) in die Vorderseite des Loches (20) beweglich ist.

## Revendications

1. Procédé pour l'équilibrage de moteurs électriques (2), le procédé incluant une étape de cartographie destinée à détecter la présence d'un déséquilibre possible d'un moteur électrique (2) placé dans une station en fonctionnement déterminée (S1), et une étape suivante d'équilibrage automatique du moteur électrique (2) ; l'étape d'équilibrage incluant une étape d'alimentation dans laquelle ladite station en fonctionnement est alimentée avec un nombre déterminé d'éléments d'équilibrage (13), et une étape d'insertion dans laquelle chaque élément d'équilibrage (13) est inséré dans un logement respectif (4) prévu sur ledit moteur ; le nombre d'éléments d'équilibrage (13) étant fonction du déséquilibre détecté ; **caractérisé en ce que**, dans l'étape d'insertion, chaque élément d'équilibrage (13) est inséré dans un logement (4) de ladite pluralité de logements (4) répartis de manière uniforme sur la périphérie extérieure (5) d'un couvercle en plastique (3) du moteur électrique (2), qui tourne autour d'un axe de rotation (A) du moteur (2) lui-même.

2. Procédé selon la revendication 1, **caractérisé en ce que** ladite étape d'alimentation inclut une étape d'avancement dans laquelle un fil continu (15) constitué d'un matériau amagnétique est avancé le long d'un trajet d'avancement (P) s'étendant à travers une station de coupe (S3), et une étape de coupe dans laquelle le fil (15) est découpé à ladite station de coupe, de manière à obtenir lesdits éléments d'équilibrage ; la longueur (L) de chaque élément d'équilibrage (13) étant fonction du déséquilibre détecté.

3. Procédé selon la revendication 2, **caractérisé en ce que** ladite étape d'alimentation inclut une étape dans laquelle ledit fil (15) est déroulé d'une bobine associée (28), et une étape dans laquelle le fil (15) est étiré à une station d'étirage (29) placée le long dudit trajet d'avancement (P), en amont de ladite station de coupe (S3).

4. Procédé selon la revendication 2, **caractérisé en ce que** l'étape d'équilibrage inclut une étape de rotation dans chaque logement (4) autour dudit axe de rotation (A) d'un angle de rotation qui est fonction du déséquilibre détecté.

5. Machine d'équilibrage (1) associée à un moteur électrique (2), ladite machine (1) incluant des moyens de cartographie (8) destinés à détecter un déséquilibre possible dudit moteur électrique (2) placé dans une station en fonctionnement déterminée (S1), et des moyens (10) pour l'équilibrage automatique du moteur électrique (2) ; les moyens d'équilibrage (10) incluant des moyens (12) pour alimenter ladite station en fonctionnement avec un nombre déterminé d'éléments d'équilibrage (13), ainsi que des moyens (26) pour insérer chaque élément d'équilibrage (13) à l'intérieur d'un logement respectif (4) prévu sur ledit moteur (2) ; le nombre d'éléments d'équilibrage (13) alimentés étant fonction du déséquilibre détecté ; **caractérisée en ce que** les logements (4) sont répartis de manière uniforme sur la périphérie extérieure (5) d'un couvercle en plastique (3) du moteur électrique (2), et **en ce que** ledit couvercle en plastique (3) tourne autour d'un axe de rotation (A) du moteur (2) lui-même pendant l'opération d'équilibrage.

6. Machine selon la revendication 5, **caractérisée en ce que** lesdits moyens d'alimentation (12) incluent un dispositif (14) conçu pour faire avancer un fil continu (15) constitué d'un matériau amagnétique le long d'un trajet d'avancement (P) s'étendant à travers une station de coupe (S3), et un dispositif de coupe (16) conçu pour couper le fil (15) à la station de coupe (S3) elle-même, de manière à obtenir lesdits éléments d'équilibrage (13) ; la longueur (L) de chaque élément d'équilibrage (13) étant fonction du déséquilibre détecté.

7. Machine selon la revendication 6, **caractérisée en ce que** lesdits moyens d'alimentation (12) incluent un magasin à bobines (28) pour ledit fil (15) et des moyens d'étirage (29) conçus pour étirer le fil (15) lui-même, placé le long du trajet d'avancement (P), entre la station de coupe (S3) et le magasin (28) lui-même.

8. Machine selon la revendication 7, **caractérisée en ce que** le dispositif d'avancement (14) inclut un élément de contrôle (30) qui contrôle la longueur du fil (15) qui a été avancée vers la station de coupe (S3).

9. Machine selon la revendication 8, **caractérisée en ce que** lesdits moyens d'équilibrage (10) incluent des moyens de rotation (11) conçus pour faire tourner chaque logement (4) autour de l'axe de rotation (A) d'un angle de rotation déterminé qui est fonction du déséquilibre détecté.

10. Machine selon la revendication 6, **caractérisée en ce que** ledit dispositif de coupe (16) inclut un trou calibré (20) pour laisser passer ledit fil (15) ; un canal d'avancement (21) pour lesdits éléments d'équilibrage (13), ledit canal étant en communication à l'entrée avec le trou (20) ; et un élément de coupe mobile (22) se trouvant, alternativement, le long du canal (21) et en face du trou (20).
